Europäisches Patentamt

European Patent Office

Office européen des brevets

(19)

(11) **EP 0 574 067 B1**

(12) **FASCICULE DE BREVET EUROPEEN**

(45) Date de publication et mention
de la délivrance du brevet:
**10.09.1997 Bulletin 1997/37**

(51) Int Cl.6: **C08F 10/00**, C08F 4/655

(21) Numéro de dépôt: **93201561.3**

(22) Date de dépôt: **01.06.1993**

(54) **Procédé de fabrication d'un solide catalytique, solide catalytique et procédé de (co)polymérisation d'oléfines au moyen de ce solide catalytique**

Verfahren zur Herstellung eines festen Katalysators, fester Katalysator und diesen festen Katalysator verwendendes Verfahren zur Olefin(co)polymerisation

Process for the preparation of a catalytic solid, catalytic solid and process for the (co)polymerization of olefins with such a catalytic solid

(84) Etats contractants désignés:
**AT BE DE ES FR GB IT NL PT SE**

(30) Priorité: **09.06.1992 BE 9200532**

(43) Date de publication de la demande:
**15.12.1993 Bulletin 1993/50**

(73) Titulaire: **SOLVAY POLYOLEFINS EUROPE - BELGIUM (Société Anonyme)**
**1050 Bruxelles (BE)**

(72) Inventeur: **Zandona, Nicola**
**B-1410 Waterloo (BE)**

(74) Mandataire: **Destryker, Elise Martine et al**
**Solvay Polyolefins Europe-Belgium**
**(Société Anonyme)**
**Département de la Propriété Industrielle**
**Rue de Ransbeek, 310**
**1120 Bruxelles (BE)**

(56) Documents cités:
**EP-A- 0 294 168          FR-A- 1 460 233**

## Description

La présente invention concerne un procédé de fabrication d'un solide catalytique du type Ziegler-Natta, comprenant un composé de magnésium et au moins un composé d'un métal de transition, plus particulièrement un composé du titane. L'invention concerne également des solides catalytiques, et leur utilisation pour la polymérisation d'oléfines, typiquement de l'éthylène.

Dans le brevet US-4218339 (MONTEDISON S.P.A.), on décrit un procédé de fabrication d'un solide catalytique pour la polymérisation d'oléfines, selon lequel on mélange certains composés de magnésium tels que le chlorure de magnésium avec certains composés de métaux de transition choisis parmi le titane, le zirconium et le vanadium tels que le tétrabutylate de titane, on halogène et réduit le mélange ainsi obtenu à l'aide d'un composé de silicium halogéné et hydrogéné agissant comme agent réductohalogénant, et on sépare le solide catalytique du milieu réactionnel.

Dans ce procédé connu la réaction de réduction et d'halogénation du composé formé par la réaction du tétrabutylate de titane avec le chlorure de magnésium est souvent incomplète, de sorte qu'une partie non négligeable du composé de métal de transition reste à son état de valence initiale (tétravalent ou pentavalent). Ceci a pour effet de réduire l'activité du solide catalytique lors de son utilisation dans la polymérisation d'oléfines.

L'invention remédie aux désavantages du procédé connu décrit ci-dessus, en fournissant un procédé nouveau, qui permet l'obtention de solides catalytiques présentant une activité élevée lorsqu'il est utilisé pour la polymérisation d'oléfines. L'invention permet en outre de fabriquer des solides catalytiques présentant une teneur faible en aluminium. Par ailleurs, l'invention permet d'obtenir des solides catalytiques comprenant plusieurs métaux de transition, ce qui élargit ainsi, lors de leur utilisation dans la polymérisation d'oléfines, la gamme du poids moléculaire des polyoléfines produites.

En conséquence, l'invention concerne un procédé de fabrication d'un solide catalytique selon lequel

a) on prépare un mélange comprenant, d'une part, au moins un composé de magnésium choisi parmi l'oxyde de Mg et les composés de formules $MgX_n(O-R)_{2-n}$ et, d'autre part, au moins un composé d'un métal de transition choisi parmi les composés de formules $MY_x(O-R')_{t-x}$ et $M'O_y(O-R'')_{s-2y}$ dans lesquelles

- X désigne un halogène
- M et M' désignent chacun un métal de transition des groupes IVB et VB du tableau périodique, dont la valence est au moins égale à 4
- Y désigne un halogène ou un groupe $(O-R''')$
- R, R', R'' et R''' désignent chacun un groupe alkyle, aryle ou cycloalkyle éventuellement substitué

- $0 \leq n \leq 2$
- $0 \leq x \leq t$, t étant égal à la valence de M
- $0 \leq y \leq s/2$, s étant égal à la valence de M',

b) on réduit et halogène le mélange ainsi obtenu au moyen d'un agent réductohalogénant, et
c) on sépare le solide catalytique précipité ainsi obtenu du milieu réactionnel;

selon l'invention, l'agent réductohalogénant comprend au moins un complexe de formule brute $M''(A)Al_2(X', X'')_8$ dans laquelle

- M'' représente un métal de transition du groupe IVB du tableau périodique
- A représente un hydrocarbure aromatique
- X' et X'' représentent chacun un halogène.

Dans le procédé selon l'invention, les composés de magnésium répondant à la formule $MgX_n(O-R)_{2-n}$ sont de préférence choisis parmi ceux dont le groupe R contient jusqu'à 20 atomes de carbone. Ils peuvent être sélectionnés parmi les monoalcoolates de magnésium tels que $MgCl(O-C_2H_5)$ et $MgCl(O-C_4H_9)$, les dialcoolates de magnésium tels que $Mg(O-C_2H_5)_2$ et $Mg(O-C_4H_9)_2$ et les dihalogénures de magnésium tels que $MgCl_2$. Les composés de magnésium spécialement préférés sont le dichlorure de magnésium et le diéthylate de magnésium.

Dans le procédé selon l'invention, les composés de métal de transition représentés par les formules $MY_x(O-R')_{t-x}$ et $M'O_y(O-R'')_{s-2y}$ sont de préférence choisis parmi ceux dont le groupe R' ou R'' contient jusqu'à 20 atomes de carbone. Ils sont de préférence choisis parmi ceux dont le métal de transition M ou M' est le titane, le zirconium ou le vanadium. Dans le cas où Y désigne un halogène, celui-ci est de préférence le chlore et dans le cas où Y désigne un groupe $(O-R''')$, R''' est choisi parmi les groupes alkyle, aryle ou cycloalkyle contenant jusqu'à 20 atomes de carbone. Ces composés peuvent être sélectionnés, dans le cas où le métal de transition est le titane, parmi les composés du titane tétravalent, par exemple les alcoolates de titane tel que le $Ti(O-C_2H_5)_4$, le $Ti(O-C_4H_9)_4$, le $Ti(O-C_3H_7)_4$, le $Ti(O-C_6H_5)_4$ et le $Ti(O-CH_3)_2(O-C_2H_5)_2$, et les haloalcoolates de titane tel que le $TiCl(O-C_4H_9)_3$. Dans le cas où le métal de transition est le vanadium, on peut par exemple citer le $V(O-C_3H_7)_4$ et le $VO(O-C_3H_7)_3$. Comme composé de zirconium on peut par exemple citer le $Zr(O-C_2H_5)_4$ et le $Zr(O-C_4H_9)_2(O-C_3H_7)_4$. On obtient des résultats particulièrement satisfaisants avec le tétrabutylate de titane et le tétrabutylate de vanadium.

Dans le procédé selon l'invention, l'agent réductohalogénant est un composé capable d'agir non seulement comme agent d'halogénation, substituant par exemples les groupes (O-R), (O-R') et (O-R'') respectivement dans les composés $MgX_n(O-R)_{2-n}$, $MY_x(O-R')_{t-x}$ et $M'O_y(O-R'')_{s-2y}$ par un halogène, mais également comme agent réducteur, diminuant la valence du métal de transition du composé $MY_x(O-R')_{t-x}$ ou $M'O_y(O-R'')_{s-2y}$. Selon l'invention, cet agent réductohalogénant consiste en un complexe d'un métal de transition du groupe IVB du tableau périodique, de formule générale $M''(A)Al_2(X',X'')_8$. Le métal de transition M'' est avantageusement choisi parmi le titane et le zirconium. Le métal de transition dans cet agent réductohalogénant est à l'état bivalent. Cet état bivalent étant instable, le complexe est stabilisé par un hydrocarbure aromatique (A). Cet hydrocarbure aromatique est de préférence le benzène ou un dérivé substitué de ce dernier comprenant au plus 12 atomes de carbone, tels que le toluène, le mésitylène, le tétra-, le penta- ou l'hexaméthylbenzène. Le toluène convient bien. On peut également utiliser d'autres hydrocarbures aromatiques et notamment les hydrocarbures aromatiques polycycliques contenant au plus 20 atomes de carbone, chaque cycle pouvant être substitué. Dans l'agent réductohalogénant, les atomes d'halogènes X' et X'' peuvent être identiques ou différents. Le chlore est préféré. Les agents réductohalogénants spécialement préférés sont ceux répondant aux formules brutes $Ti(Toluène)Al_2Cl_8$ et $Zr(Toluène)Al_2Cl_8$.

Dans le procédé suivant l'invention, l'agent réductohalogénant peut être préparé, de manière connue, par synthèse directe, en faisant réagir un halogénure du métal de transition (par exemple du tétrachlorure de titane), de l'aluminium métallique, un halogénure d'aluminium et un hydrocarbure aromatique, au sein d'un composé organique. Par composé organique on entend désigner un solvant de l'hydrocarbure aromatique. Celui-ci est le plus souvent l'hydrocarbure aromatique lui-même. On obtient ainsi une suspension dont on écarte la fraction solide. La solution ainsi recueillie, qui contient le complexe $M''(A)Al_2(X',X'')_8$, peut être utilisée telle quelle au cours du procédé, ou on peut éliminer le solvant de la solution et utiliser le solide résultant. La préparation de l'agent réductohalogénant est décrite entre autres dans la publication Transition Met. Chem., 3, 1978, Verlag Chemie, GmbH, pages 127-130 : "Preparation of halogen-modified titanium(II) arene complexes and their electronic spectra" et dans la publication Journal of Organometallic Chemistry, 54, 1973, Elsevier Sequoia S.A., pages 203-205 : "The synthesis of titanium (II) complexes containing methylbenzene ligands".

Dans une première étape du procédé selon l'invention on mélange le composé de magnésium avec le composé du métal de transition de formule $MY_x(O-R')_{t-x}$ ou $M'O_y(O-R'')_{s-2y}$ de manière que le composé de magnésium forme un complexe avec le composé de métal de transition. On exécute avantageusement le mélange dans un solvant organique qui a pour fonction de faciliter la dispersion du composé de magnésium et du composé de métal de transition, et éventuellement de dissoudre le complexe dans le cas où celui-ci est solide. Le solvant organique peut être choisi parmi les hydrocarbures aromatiques, aliphatiques et cycloaliphatiques comprenant de préférence de 5 à 12 atomes de carbone et leurs mélanges, par exemple le benzène, le pentane ou le cyclohexane. On utilise de préférence le toluène ou l'hexane. On met avantageusement en oeuvre des quantités du composé de métal de transition et du composé de magnésium telles que le rapport molaire (M ou M')/Mg soit supérieur à 0,5, de préférence au moins égal à 1, les valeurs au moins égales à 2 étant spécialement avantageuses. Il est souhaitable que la valeur de ce rapport n'excède pas 20 et soit de préférence au maximum égale à 15, les valeurs inférieures à 12 étant spécialement avantageuses. La température à laquelle on prépare le mélange doit être telle qu'on obtienne une solution après un temps raisonnable, pouvant par exemple varier d'une demi-heure à 12 heures, en agitant éventuellement le milieu réactionnel, tout en restant en dessous de la température d'ébullition des composants du mélange. La température opératoire dépend dès lors de la nature des composants du mélange et peut par exemple varier de la température ambiante jusqu'à environ 170 °C. On opère de préférence d'environ 50 à 150 °C.

Dans cette étape du procédé selon l'invention, on peut mettre en oeuvre plus d'un composé de métal de transition répondant aux formules $MY_x(O-R')_{t-x}$ ou $M'O_y(O-R'')_{s-2y}$, et/ou plus d'un composé de magnésium.

La deuxième étape du procédé selon l'invention consiste à réduire et halogéner le mélange obtenu de la première étape précitée, en mettant celui-ci en contact avec l'agent réductohalogénant. Dans le cas où l'agent réductohalogénant est mis en oeuvre sous forme solide, on le dissout d'abord dans un diluant choisi parmi les hydrocarbures aromatiques, tels que le benzène et ses dérivés ou les hydrocarbures aromatiques polycycliques, chaque cycle pouvant être substitué. Le toluène convient particulièrement bien. On met avantageusement en oeuvre des quantités telles que le rapport molaire M''/(M ou M') soit supérieur à 0,1, de préférence au moins égal à 0,3, les valeurs inférieures à 5 étant recommandées, celles de 0,3 à 1 étant spécialement avantageuses. La température opératoire et la durée de la réaction de réduction et d'halogénation ne sont pas critiques. En général cette réaction est initialisée à température ambiante, puis la température augmente rapidement lors de la réaction entre le mélange issu de la première étape et le complexe réductohalogénant, la réaction étant instantanée et exothermique. A l'issue de la réaction, on peut laisser le milieu réactionnel refroidir jusqu'à la température ambiante.

Au cours de cette deuxième étape du procédé selon l'invention, on précipite le solide catalytique.

Selon une variante avantageuse du procédé, on soumet le solide catalytique à un mûrissage à une température élevée, au moins égale à 40 °C et inférieure à la température d'ébullition du solvant utilisé, par exemple pendant un temps de 0,5 à 12 heures environ. Ce mûrissage est de préférence effectué à une température de 45 à 80 °C, pendant au moins une heure.

La troisième étape du procédé selon l'invention consiste à séparer le solide catalytique précipité du milieu réactionnel par tout moyen connu tel qu'une filtration, une centrifugation ou une décantation du liquide surnageant.

Dans une première forme d'exécution particulière du procédé selon l'invention on soumet le solide catalytique précipité à un lavage au moyen d'un liquide organique choisi parmi les hydrocarbures aliphatiques. Les liquides organiques préférés sont les alcanes linéaires tels que le n-butane, le n-hexane et le n-heptane, ou les alcanes ramifiés tels que l'isobutane, l'isopentane, l'isooctane et le 2,2-diméthylpropane, ou les cycloalcanes tels que le cyclopentane et le cyclohexane ou leurs mélanges. L'hexane convient particulièrement bien. Le lavage est réalisé en mettant le solide catalytique en contact avec le liquide organique par exemple en le dispersant dans le liquide organique. Dans le cas où le solide catalytique est soumis à un mûrissage, le lavage est habituellement effectué après le mûrissage. On peut bien entendu effectuer plusieurs lavages succesifs avec le liquide organique.

Dans une deuxième forme d'exécution du procédé selon l'invention l'agent réductohalogénant est déposé sur un support minéral. A cet effet, on imprègne le support minéral avec une solution de l'agent réductohalogénant dans un diluant organique, de manière que l'agent réductohalogénant soit adsorbé sur le support minéral. Le diluant peut être celui utilisé à la deuxième étape du procédé, explicitée plus haut. Dans le cas où le support est un oxyde minéral, celui-ci peut être sélectionné parmi les oxydes de silicium, d'aluminium, de titane, de zirconium, de thorium, leurs mélanges et les oxydes mixtes de ces métaux tels que le silicate d'aluminium. Dans le cas où le support minéral est un halogénure, celui-ci peut par exemple être sélectionné parmi le chlorure de magnésium et le chlorure de manganèse. On utilise de préférence de la silice. La silice déshydroxylée convient bien. Les conditions opératoires de l'imprégnation ne sont pas critiques, la température pouvant varier de la température ambiante à la température d'ébullition du diluant organique, et la durée d'imprégnation étant de quelques minutes à plusieurs heures. Dans cette forme d'exécution du procédé selon l'invention, le support minéral imprégné de l'agent réductohalogénant est séparé du diluant organique, puis dispersé dans le mélange obtenu à la première étape explicitée plus haut.

Dans une troisième forme d'exécution du procédé suivant l'invention, qui est préférée, le composé de magnésium utilisé à la première étape est le dichlorure de magnésium.

Dans une première variante de cette troisième forme d'exécution on mélange le dichlorure de magnésium avec du tétrabutylate de titane en de telles quantités que le rapport molaire $Ti(O-C_4H_9)_4/MgCl_2$ soit supérieur ou égal à 2 pour assurer la dissolution totale du dichlorure de magnésium. Les valeurs inférieures à 5 sont recommandées, celles voisines de 2 étant préférées.

Dans une deuxième variante de cette troisième forme d'exécution on mélange le dichlorure de magnésium avec du tétrabutylate de vanadium en de telles quantités que le rapport molaire $V(O-C_4H_9)_4/MgCl_2$ soit au moins égal à 2, de préférence au moins égal à 5 et n'excède pas 20.

Dans une quatrième forme d'exécution du procédé selon l'invention le composé de magnésium utilisé à la première étape est un dialcoolate de magnésium que l'on met en oeuvre en une quantité telle que le rapport molaire (M ou M')/Mg soit supérieur ou égal à 1. En pratique, pour des considérations d'ordre économique, on n'a pas intérêt à excéder un rapport molaire de 5, les valeurs de 1 à 2 étant préférées. Dans cette forme d'exécution du procédé selon l'invention, le dialcoolate de magnésium est de préférence choisi parmi les alcoolates contenant jusqu'à 20 atomes de carbone, le diéthylate de magnésium étant spécialement avantageux. En variante, le dialcoolate de magnésium peut être préparé in situ à la première étape du procédé en mélangeant du magnésium métallique et un alcool en des quantités suffisantes pour obtenir le dialcoolate de magnésium, auquel on ajoute ensuite le composé du métal de transition de formule $MY_x(O-R')_{t-x}$ ou $M'O_y(O-R'')_{s-2y}$.

Dans une variante de cette quatrième forme d'exécution, on soumet le solide catalytique recueilli de la troisième étape (et éventuellement soumis à un mûrissage et/ou un lavage) à une halogénation ultérieure avec du tétrahalogénure de titane, l'halogène du tétrahalogénure de titane et ceux de l'agent réductohalogénant étant de préférence identiques. On obtient des résultats particulièrement satisfaisants avec le tétrachlorure de titane, le chlore étant alors sélectionné pour les halogènes du complexe réductohalogénant. Dans cette variante le solide catalytique issu de l'halogénation ultérieure peut éventuellement être soumis à un mûrissage et/ou un lavage, le lavage et le mûrissage étant effectués comme décrit plus haut.

Dans une cinquième forme d'exécution du procédé selon l'invention, l'agent réductohalogénant de formule brute $M''(A)Al_2(X',X'')_8$ est préparé en faisant réagir du tétrahalogénure du métal de transition ($M''X'_4$), du trihalogénure d'aluminium ($AlX''_3$), de l'hydrocarbure aromatique (A) et du magnésium métallique, que l'on met en suspension dans un solvant organique qui est le plus souvent l'hydrocarbure lui-même. En général, on met en oeuvre des quantités correspondant à un rapport molaire $M''X'_4:Mg:AlX''_3$ de 1:(1 à 2):(2 à 6) (ce rapport étant de préférence environ égal à 1:1:2) dans un excès d'hydrocarbure aromatique. Cette synthèse est généralement réalisée dans les mêmes conditions opératoires que celles utilisées lors de la synthèse classique du complexe de formule brute $M''(A)Al_2(X',X'')_8$ décrite dans les publications précitées. On opère avantageusement en refluant la suspension à une température égale ou légèrement supérieure à la température d'ébullition de l'hydrocarbure aromatique pendant une durée variant de 1 à 12 heures, en laissant refroidir le milieu réactionnel, en séparant l'éventuelle fraction solide comprenant l'excès d'un des composants mis en oeuvre, et en recueillant la solution ainsi obtenue. Dans cette forme d'exécution du procédé, il est avantageux d'utiliser le même halogène pour les deux composés M''X'$_4$ et AlX''$_3$.

Le procédé selon l'invention permet l'obtention d'un solide catalytique comprenant un coprécipité d'un composé halogéné du métal de transition M ou M' à l'état trivalent, d'un composé halogéné du métal de transition M'' à l'état trivalent et d'un halogénure de magnésium. Ce solide catalytique présente généralement une teneur en aluminium faible n'excédant pas 10 % du poids du solide catalytique.

La présente invention concerne dès lors également des solides catalytiques comprenant un coprécipité d'un halogénure de magnésium et d'halogénures d'au moins deux métaux de transition choisis parmi les groupes IVB et VB du tableau périodique, dont au moins 90 % (en général au moins 95 %) en poids présente une structure amorphe. Les solides catalytiques selon l'invention présentent une teneur en magnésium supérieure à 0,5 % du poids du solide catalytique, de préférence au moins égale à 2 %, par exemple au moins égale à 5 %. Cette teneur en magnésium est en général au maximum égale à 20 % du poids du solide catalytique, de préférence au maximum égale à 18 %, les valeurs inférieures à 14 % étant les plus avantageuses. Dans les solides catalytiques selon l'invention, la teneur totale en métaux de transition peut atteindre 30 % du poids du solide catalytique; elle est en général au maximum égale à 25 %, et est habituellement supérieure à 5 %, les valeurs au moins égales à 10 % étant les plus courantes. Dans les solides catalytiques selon l'invention, l'halogénure de magnésium et les halogénures des métaux de transition peuvent dériver du même halogène ou d'halogènes différents. On préfère des halogénures dérivant du même halogène, le chlore étant spécialement recommandé.

Dans les solides catalytiques selon l'invention, les métaux de transition différents sont généralement dans un rapport molaire au moins égal à 1 et au maximum égal à 4, ce rapport molaire étant de préférence supérieur à 1,2 et au maximum égal à 2,8.

Les solides catalytiques selon l'invention, présentent la particularité avantageuse de posséder une structure amorphe caractérisée par une incorporation homogène des métaux de transition trivalents dans le magnésium, améliorant ainsi leur intéraction mutuelle. Ceci a pour effet d'augmenter l'activité des solides catalytiques selon l'invention. En outre, la teneur en aluminium des solides catalytiques selon l'invention n'excède pas 10 % du poids du solide catalytique et est généralement inférieure à 9 % de ce poids, par exemple de 0,5 à 5 %, les valeurs situées de 0,7 à 4 % étant les plus courantes.

Dès lors, les solides catalytiques selon l'invention trouvent une utilisation particulièrement intéressante dans la (co)polymérisation d'oléfines, en permettant notamment d'obtenir des polyoléfines présentant une large gamme du poids moléculaire.

Les solides catalytiques selon l'invention peuvent être utilisés pour la polymérisation d'oléfines contenant jusqu'à 20 atomes de carbone par molécule. Les oléfines contiennent avantageusement de 2 à 12 atomes de carbone par molécule et sont par exemple choisies parmi l'éthylène, le propylène, le 1-butène, le 1-pentène, le 3-méthyl-1-butène, le 1-hexène, les 3- et 4-méthyl-1-pentènes, le 1-octène, le 3-éthyl-1-butène, le 1-heptène, le 3,4-diméthyl-1-hexène, le 4-butyl-1-octène, le 5-éthyl-1-décène et le 3,3-diméthyl-1-butène. Les solides catalytiques trouvent une utilisation particulière dans la production d'homopolymères de l'éthylène ou de copolymères de l'éthylène avec un ou plusieurs comonomères oléfiniquement insaturés et pouvant comprendre jusqu'à 8 atomes de carbone, par exemple le propylène, le 1-butène, le 1-pentène, le 3-méthyl-1-butène, le 1-hexène, les 3- et 4-méthyl-1-pentènes et le 1-octène. Une ou plusieurs dioléfines comprenant de 4 à 18 atomes de carbone peuvent également être copolymérisées avec l'éthylène. De préférence, les dioléfines sont des dioléfines aliphatiques non conjuguées telles que le 4-vinylcyclohexène et le 1,5-hexadiène, ou des dioléfines alicycliques ayant un pont endocyclique telles que le dicyclopentadiène, le méthylène- et l'éthylidènenorbornène et des dioléfines aliphatiques conjuguées telles que le 1,3-butadiène, l'isoprène et le 1,3-pentadiène.

Les solides catalytiques selon l'invention conviennent particulièrement bien pour la fabrication d'homopolymères de l'éthylène et de copolymères contenant au moins 90 %, de préférence au moins 95 %, en poids d'éthylène. Les comonomères préférés sont choisis parmi le propylène, le 1-butène, le 1-hexène et le 1-octène.

L'invention concerne dès lors également un procédé pour la (co)polymérisation d'oléfines telles que définies plus haut, mettant en oeuvre un solide catalytique conforme à l'invention. Dans la (co)polymérisation on peut éventuellement mettre en oeuvre un cocatalyseur en plus du solide catalytique. A titre d'exemples, on peut citer, comme cocatalyseurs les composés organoaluminiques de préférence non halogénés tels que le tributyl-, le triméthyl-, le triéthyl-, le tripropyl-, le triisopropyl-, le triisobutyl-, le trihexyl-, le trioctyl- et le tridodécylaluminium. Dans une variante avantageuse la (co)polymérisation est effectuée en présence d'un régulateur du poids moléculaire tel que l'hydrogène. La (co)polymérisation peut être effectuée indifféremment en solution, en suspension ou en phase gazeuse, et peut être réalisée en continu ou en discontinu. On préfère, selon l'invention, effectuer la (co)polymérisation en suspension, par exemple dans un diluant hydrocarboné tel que les hydrocarbures aliphatiques, cycloaliphatiques et aromatiques liquides, en quantités telles et à une température telle qu'au moins 50 % (de préférence 70 %) du polymère formé y soit insoluble. Des diluants hydrocarbonés préférés sont les alcanes linéaires tels que le n-butane, le n-hexane et le n-heptane ou les alcanes ramifiés tels que l'isobutane, l'isopentane, l'isooctane et le 2,2-diméthylpropane ou les cycloalcanes tels que le cyclopentane et le cyclohexane ou leurs mélanges. La température de polymérisation est choisie généralement de 20 à 200 °C, de préférence de 50 à 150 °C, en particulier de 80 à 115 °C. La pression d'oléfine est choisie le plus souvent entre la pression atmosphérique et 5 MPa, de préférence de 0,2 à 2 MPa, plus particulièrement de 0,4 à 1,5 MPa. Dans le cas où on effectue la (co)polymérisation en présence d'hydrogène, la pression partielle de l'hydrogène est avantageusement comprise entre 0,01 et 0,50 MPa, le rapport entre les pressions partielles de l'hydrogène et de l'oléfine n'excédant généralement pas 3, plus particulièrement n'excédant pas 1/3.

Les exemples dont la description suit, servent à illustrer l'invention. Dans ces exemples on a préparé des solides catalytiques conformes à l'invention, que l'on a ensuite utilisés pour polymériser de l'éthylène en suspension. La signification des symboles utilisés dans ces exemples, les unités exprimant les grandeurs mentionnées et les méthodes de mesure de ces grandeurs sont explicitées ci-dessous.

$\alpha$ = activité catalytique exprimée en grammes de polyoléfine insoluble, obtenus par heure et par gramme de catalyseur et divisés par la pression partielle de l'éthylène.

<Al> = teneur en aluminium exprimée en grammes d'aluminium par 100 grammes de solide catalytique.

HLMI = indice de fluidité exprimé en fondu, mesuré sous une charge de 21,6 kg à 190 °C et exprimé en g/10 min suivant la norme ASTM D 1238.

OI = teneur en oligomères exprimée en gramme d'oligomères par kilo de polyoléfine et mesurée par extraction à l'hexane à sa température d'ébullition.

$\eta_0$ = viscosité dynamique exprimée en dPa.s et mesurée à un gradient de vitesse de 1 s$^{-1}$ et à 190 °C.

$\eta_2$ = viscosité dynamique exprimée en dPa.s et mesurée à un gradient de vitesse de 100 s$^{-1}$ et à 190 °C.

$\eta$ = rapport $\eta_0/\eta_2$ calculé sur la base de l'équation

$$\eta = 0,307 + 10^{\log \eta'}$$

dans laquelle

$$\log \eta' = 2 \frac{\log(76680/MI_2) - \log\eta_2}{2 - \log(2,53 \times MI_2)}$$

où

$MI_2$ = indice de fluidité exprimé en fondu, mesuré sous une charge de 2,16 kg à 190 °C et exprimé en g/10 min.

## Exemple 1

### A. Préparation du solide catalytique

(i) Préparation du mélange des composés MgX$_n$(O-R)$_{2-n}$ et MY$_x$(O-R')$_{t-x}$

On a introduit dans un autoclave d'un litre muni d'un agitateur, 394 mmoles de dichlorure de magnésium, 782 mmoles de tétrabutylate de titane et 196 ml d'hexane. Puis on a élevé la température à 90 °C et on a agité le contenu de l'autoclave pendant 6 heures en maintenant la température à 90 °C, jusqu'à dissolution complète du dichlorure de magnésium.

(ii) Préparation du complexe réductohalogénant

On a introduit dans un réacteur Schlenk de 250 ml muni d'un agitateur, 21 mmoles de trichlorure d'aluminium et 92 mmoles d'aluminium métallique, que l'on a ensuite agitées pendant 30 minutes à 130 °C. Puis on y a ajouté 50 ml de toluène et 10,1 mmoles de tétrachlorure de titane. On a agité le tout pendant 4 heures à la température d'ébullition du toluène. Ensuite, on a laissé refroidir la solution à température ambiante.

(iii) Réduction et halogénation du mélange de l'étape (i)

On a introduit dans un réacteur Schlenk de 250 ml muni d'un agitateur 25 ml de la solution obtenue en (ii), à laquelle on a ajouté 3 ml du mélange obtenu en (i). Le solide précipité a été recueilli du milieu réactionnel et soumis à un lavage avec 100 ml d'hexane, que l'on a répété 5 fois. Le solide catalytique ainsi obtenu présentait la caractéristique suivante : <Al> = 1,7.

### B. Polymérisation de l'éthylène

Dans un autoclave de 1,5 litres on a introduit à température ambiante et sous pression atmosphérique 0,5 l d'hexane et 0,4 ml d'une solution de 0,35 mM de triéthylaluminium à titre de cocatalyseur. La température a été amenée à 85 °C. Puis on y a introduit de l'éthylène à une pression de 0,6 MPa, de l'hydrogène à une pression partielle de 0,1 MPa et une solution de 1,52 mg du solide catalytique obtenu en A dans de l'hexane. La température et la pression partielle de l'éthylène ont été maintenues constantes pendant une période de 120 minutes, après laquelle on a coupé l'alimentation de l'éthylène. Puis on a refroidi le milieu de polymérisation jusqu'à la température ambiante et on l'a dégazé. On a recueilli 134 g de polyéthylène de la suspension par évaporation de l'hexane. On a obtenu les résultats suivants :

$\alpha$ = 7346

HLMI = 1,7
OI = 0,3.

## Exemple 2

### A. Préparation du solide catalytique

#### (i) Préparation du mélange des composés $MgX_n(O-R)_{2-n}$ et $MY_x(O-R')_{t-x}$

On a introduit dans un autoclave d'un litre muni d'un agitateur, 167 mmoles de tétrabutylate de titane, 83 mmoles de diéthylate de magnésium et 20 ml d'hexane. Puis on a élevé la température à 140 °C et on a agité le contenu de l'autoclave pendant 4 heures en maintenant la température à 140 °C, jusqu'à dissolution complète du diéthylate de magnésium.

#### (ii) Préparation du complexe réductohalogénant

On a introduit dans un réacteur Schlenk de 250 ml muni d'un agitateur, 112 mmoles de trichlorure d'aluminium et 408 mmoles d'aluminium métallique, que l'on a ensuite agitées pendant 5 heures à 100 °C. Puis, après avoir refroidi à température ambiante, on y a ajouté 100 ml de toluène et un mélange de 6,1 ml de tétrachlorure de titane (55,5 mmoles de titane) et 25 ml de toluène. Après, on a agité le tout pendant 5 heures à 130 °C. Ensuite, on a refroidi la solution à température ambiante.

#### (iii) Réduction et halogénation du melange de l'étape (i)

On a introduit dans un réacteur Schlenk de 250 ml muni d'un agitateur, 3 ml du mélange obtenu en (i), 35 ml d'hexane, 5 ml de la solution obtenue en (ii) et 25 ml de toluène. Le tout a été soumis à un mûrissage en agitant pendant une heure à 55 °C. Puis on a recueilli le précipité de la suspension, que l'on a lavé 3 fois avec 50 ml d'hexane. Ensuite, on y a ajouté 10 ml de tétrachlorure de titane et on a laissé mûrir la suspension pendant 12 heures à 70 °C en agitant. Le solide précipité a été recueilli de la suspension, et ensuite soumis à 5 lavages avec 50 ml d'hexane. Le solide catalytique obtenu présentait la caractéristique suivante : <Al> = 2,3.

### B. Polymérisation de l'éthylène

La polymérisation de l'éthylène a été effectuée comme décrit dans l'exemple 1 (B) avec les modifications opératoires suivantes :

- pression partielle de l'éthylène : 0,6 MPa
- pression partielle initiale de l'hydrogène : 0,1 MPa
- quantité du cocatalyseur mise en oeuvre : 0,4 ml d'une solution de 0,35 M de triéthylaluminium
- quantité du solide catalytique mise en oeuvre : 1,42 mg.

On a obtenu 87 g de polyéthylène présentant les caractéristiques suivantes :

$\alpha$ = 5087
HLMI = 2,2
$\eta_0/\eta_2$ = 10,54
OI = 2,7.

## Exemple 3

### A. Préparation du solide catalytique

#### (i) Préparation du mélange des composés $MgX_n(O-R)_{2-n}$ et $MY_x(O-R')_{t-x}$

On a introduit dans un flacon d'un litre à 4 orifices et muni d'un agitateur et d'un condenseur à reflux, 422 mmoles de dichlorure de magnésium, 285 mmoles de tétrabutylate de vanadium, 2 ml de butanol et 50 ml d'hexane. La température a été amenée à 110 °C et le mélange a été agité pendant 7 heures à 110 °C. Puis on l'a refroidi à température ambiante. Après, on a transféré le liquide surnageant dans un flacon d'un litre. On a ajouté au solide restant 150 ml d'hexane et la dispersion ainsi obtenue a été maintenue pendant 8 heures à 110 °C. Ensuite, après l'avoir refroidie à température ambiante, on en a extrait la fraction liquide que l'on a réuni au liquide surnageant précité.

#### (ii) Préparation du complexe réductohalogénant

On a introduit dans un flacon de 250 ml à trois orifices et muni d'un agitateur, 290 mmoles de trichlorure d'aluminium, 481 mmoles d'aluminium métallique et 150 ml de toluène. La température a été élevée jusqu'à reflux du toluène. On y a ajouté ensuite goutte à goutte une solution de 15 ml de tétrachlorure de titane et 15 ml de toluène. Après, le mélange a été reflué pendant 20 heures en agitant. Après avoir refroidi à température ambiante et éliminé l'excès d'aluminium par filtration, le filtrat a été traité avec 300 ml d'hexane. On a recueilli le solide précipité par filtration et on l'a lavé deux fois avec 50 ml d'hexane et séché sous pression réduite pendant 4 heures à température ambiante.

#### (iii) Réduction et halogénation du mélange de l'étape (i)

On a introduit dans un réacteur Schlenk de 200 ml muni d'un agitateur, 12,4 g du solide obtenu en (ii) et 50 ml de toluène, que l'on a agités à température ambiante jusqu'à dissolution du solide dans le toluène. Puis en agitant, on y a ajouté goutte à goutte 17 ml de la solution obtenue en (i). Sous l'effet du caractère exothermique de la réaction, la température du mélange réactionnel à crû. A l'issue de la réaction, on a laissé le mélange réactionnel refroidir jusqu'à la température ambiante. Puis on y a ajouté 40 ml d'hexane et après précipitation du solide, on a écarté le liquide surnageant et lavé le précipité 5 fois avec 50 ml d'hexane par lavage.

B. Polymérisation de l'éthylène

Pour la polymérisation de l'éthylène on a opéré comme décrit dans l'exemple 1 (B) avec les modifications opératoires suivantes :

- pression partielle de l'éthylène : 0,6 MPa
- pression partielle initiale de l'hydrogène : 0,2 MPa
- quantité du cocatalyseur mise en oeuvre : 0,5 ml d'une solution de 40 g/l de triéthylaluminium
- quantité du solide catalytique mise en oeuvre : 9 mg.

On a obtenu 108 g de polyéthylène présentant les caractéristiques suivantes :

$\alpha$ = 2222
HLMI = 6,4
$\eta$ = 9,2
OI = 9,9.

Exemple 4

A. Préparation du solide catalytique

(i) Préparation du mélange des composés $MgX_n(O-R)_{2-n}$ et $MY_x(O-R')_{t-x}$

On a introduit dans un flacon d'un litre muni d'un agitateur et d'un condenseur à reflux, 377 mmoles de dichlorure de magnésium, 754 mmoles de tétrabutylate de titane et de l'hexane jusqu'à un volume final de 450 ml. La température a été augmentée jusqu'à reflux de l'hexane. Puis le mélange a été agité et reflué pendant 4 heures, jusqu'à dissolution complète du dichlorure de magnésium. Après, on a refroidi la solution à température ambiante.

(ii) Préparation du complexe réductohalogénant, et réduction et halogénation du mélange obtenu en (i)

On a introduit dans un flacon d'un demi litre muni d'un agitateur 252 mmoles d'aluminium, 515 mmoles de trichlorure d'aluminium et du toluène jusqu'à un volume final de 310 ml. On a prélevé 16 ml de la suspension ainsi obtenue et on les a transférés, avec 19,6 mmoles de tétrachlorure de zirconium, dans un autre flacon d'un demi litre muni d'un agitateur et d'un condenseur à reflux. Puis la température a été élevée et on a reflué le mélange pendant 10 heures jusqu'à l'obtention d'une solution, à laquelle on a ensuite ajouté 70 ml de la solution obtenue en (i). Après, on a dilué ce mélange avec 60 ml d'hexane et on l'a reflué pendant 30 minutes à 60 °C. Après avoir refroidi le mélange à température ambiante, le solide précipité a été recueilli et lavé 8 fois avec 40 ml d'hexane par lavage. Le solide catalytique obtenu présentait la caractéristique suivante : <Al> = 1,5.

B. Polymérisation de l'éthylène

Pour la polymérisation de l'éthylène on a opéré comme décrit dans l'exemple 1 (B) avec les modifications opératoires suivantes :

- pression partielle de l'éthylène : 0,6 MPa
- pression partielle initiale de l'hydrogène : 0,2 MPa
- quantité du cocatalyseur mise en oeuvre : 1,5 ml d'une solution de 0,40 g/l de triéthylaluminium
- quantité du solide catalytique mise en oeuvre : 9 mg.

On a obtenu 108 g de polyéthylène présentant les caractéristiques suivantes :

$\alpha$ = 1306
HLMI = 11,12
$\eta$ = 6,5
OI = 2,3.

Exemple 5

A. Préparation du solide catalytique

(i) Préparation du mélange des composés $MgX_n(O-R)_{2-n}$ et $MY_x(O-R')_{t-x}$

On a introduit dans un flacon d'un litre à 4 orifices et muni d'un agitateur et d'un condenseur à reflux, 422 mmoles de dichlorure de magnésium, 285 mmoles de tétrabutylate de vanadium, 2 ml de butanol et 50 ml d'hexane. La température a été amenée à 110 °C et le mélange a été agité pendant 7 heures à 110 °C. Puis on a refroidi à température ambiante. Après, on a transféré le liquide surnageant dans un flacon d'an litre. On a ajouté au solide restant 150 ml d'hexane et la dispersion ainsi obtenue a été maintenue pendant 8 heures à 110 °C. Ensuite, après l'avoir refroidie à température ambiante, on en a extrait la fraction liquide que l'on a réuni au liquide surnageant précité.

(ii) Préparation du complexe réductohalogénant, et réduction et halogénation du mélange obtenu en (i)

On a introduit dans un réacteur Schlenk de 200 ml muni d'un agitateur, 15,8 mmoles de tétrachlorure de zirconium, 60 ml de toluène et 20,5 ml d'une solution comprenant 15,8 mmoles de magnésium métallique et 31,6 mmoles de trichlorure d'aluminium, que l'on a ensuite agités pendant 7 heures à 100 °C. Puis, après avoir refroidi à température ambiante, on y a ajouté goutte à goutte 15,8 ml de la solution obtenue en (i). Puis on a agité le tout pendant 1,5 heures à 85 °C. Ensuite, on a refroidi la solution à température ambiante.

Le liquide surnageant a été écarté et le solide résultant lavé 5 fois avec 50 ml d'hexane par lavage. Le solide catalytique ainsi obtenu présentait la caractéristique suivante : <Al> = 8,7.

### B. Polymérisation de l'éthylène

Pour la polymérisation de l'éthylène on a opéré comme décrit dans l'exemple 1 (B) avec les modifications opératoires suivantes :

- pression partielle de l'éthylène : 0,6 MPa
- pression partielle initiale de l'hydrogène : 0,1 MPa
- quantité du cocatalyseur mise en oeuvre : 1,5 ml d'une solution de 40 g/l de triisobutylaluminium
- quantité du solide catalytique mise en oeuvre : 20 mg.

On a obtenu 104 g de polyéthylène présentant les caractéristiques suivantes :

$\alpha$ = 433
HLMI = 3,6
OI = 41.

### Exemple 6

#### A. Préparation du solide catalytique

(i) Préparation du mélange des composés $MgX_n(O\text{-}R)_{2\text{-}n}$ et $MY_x(O\text{-}R')_{t\text{-}x}$

On a introduit dans un flacon d'un litre muni d'un agitateur et d'un condenseur à reflux, 377 mmoles de dichlorure de magnésium, 754 mmoles de tétrabutylate de titane et de l'hexane jusqu'à un volume final de 450 ml. La température a été augmentée jusqu'à reflux de l'hexane. Puis on a agité et reflué le mélange pendant 4 heures, jusqu'à dissolution complète du dichlorure de magnésium. Après on a refroidi la solution à température ambiante.

(ii) Préparation du complexe réductohalogénant, et réduction et halogénation du mélange obtenu en (i)

On a introduit dans un réacteur Schlenk de 200 ml muni d'un agitateur, 5,68 g de silice (que l'on a préalablement activée dans un lit fluidisé à 800 °C pendant 20 heures sous azote), 80 ml de toluène et 40 ml d'une solution obtenue en dissolvant 4,63 g du complexe réductohalogénant obtenu dans l'exemple 3 (A,ii) dans 50 ml de toluène. Puis on a agité le mélange pendant quelques minutes à température ambiante. Après précipitation du solide, on a écarté la phase liquide et soumis le solide restant à deux lavages, chaque lavage étant effectué avec 40 ml d'hexane. On a ensuite mis le solide en suspension dans 50 ml d'hexane et on y a ajouté, en agitant, 9 ml de la solution obtenue en (i). Sous l'effet du caractère exothermique de la réaction, la température du mélange réactionnel à crû. A l'issue de la réaction, on a laissé le mélange réactionnel refroidir jusqu'à la température ambiante et on a recueilli le solide catalytique de la suspension. Il présentait la caractéristique suivante :

<Al> =    2,0.

### B. Polymérisation de l'éthylène

Pour la polymérisation de l'éthylène on a opéré comme décrit dans l'exemple 1 (B) avec les modifications opératoires suivantes :

- pression partielle de l'éthylène : 0,6 MPa
- pression partielle initiale de l'hydrogène : 0,1 MPa
- quantité du cocatalyseur mise en oeuvre : 0,6 ml d'une solution de 0,40 g/l de triéthylaluminium
- durée de la polymérisation : 330 minutes
- quantité du solide catalytique mise en oeuvre : 9 mg.

On a obtenu 116 g de polyéthylène présentant les caractéristiques suivantes :

$\alpha$ =    385
HLMI =    3,6
$\eta$ =    6,1
OI =    5,9.

### Revendications

1. Procédé de fabrication d'un solide catalytique selon lequel

a) on prépare un mélange comprenant, d'une part, au moins un composé de magnésium choisi parmi l'oxyde de Mg et les composés de formules $MgX_n(O\text{-}R)_{2\text{-}n}$, et, d'autre part, au moins un composé d'un métal de transition choisi parmi les composés de formules $MY_x(O\text{-}R')_{t\text{-}x}$ et $M'O_y(O\text{-}R'')_{s\text{-}2y}$ dans lesquelles

- X désigne un halogène
- M et M' désignent chacun un métal de transition des groupes IVB et VB du tableau périodique, dont la valence est au moins égale à 4
- Y désigne un halogène ou un groupe (O-R''')
- R, R', R'' et R''' désignent chacun un groupe alkyle, aryle ou cycloalkyle éventuellement substitué
- $0 \leq n \leq 2$
- $0 \leq x \leq t$, t étant égal à la valence de M
- $0 \leq y \leq s/2$, s étant égal à la valence de M',

b) on réduit et halogène le mélange ainsi obtenu au moyen d'un agent réductohalogénant, et

c) on sépare le solide catalytique précipité ainsi obtenu du milieu réactionnel,

caractérisé en ce que l'agent réductohalogénant comprend au moins un complexe de formule brute $M''(A)Al_2(X',X'')_8$ dans laquelle

- M'' représente un métal de transition du groupe IVB du tableau périodique
- A représente un hydrocarbure aromatique
- X' et X'' représentent chacun un halogène.

2. Procédé selon la revendication 1, caractérisé en ce que le groupe alkyle, aryle ou cycloalkyle est sélectionné parmi ceux comprenant jusqu'à 20 atomes de carbone.

3. Procédé selon la revendication 1 ou 2, caractérisé en ce que le composé de métal de transition M ou M', le composé de magnésium et le complexe $M''(A)Al_2(X',X'')_8$ sont mis en oeuvre en quantités telles que le rapport molaire (M ou M')/Mg soit de 1 à 20, et que le rapport molaire M''/(M ou M') soit de 0,3 à 1.

4. Procédé selon l'une quelconque des revendications 1 à 3, caractérisé en ce qu'on prépare le mélange dans au moins un solvant organique sélectionné parmi le toluène et l'hexane et on met en oeuvre le complexe $M''(A)Al_2(X',X'')_8$ à l'état d'une solution dans le toluène.

5. Procédé selon l'une quelconque des revendications 1 à 4, caractérisé en ce qu'on prépare le mélange à une température de 50 à 135 °C.

6. Procédé selon l'une quelconque des revendications 1 à 5, caractérisé en ce qu'on soumet le solide catalytique à un mûrissage à une température de 45 à 80 °C, pendant au moins une heure.

7. Procédé selon l'une quelconque des revendications 1 à 6, caractérisé en ce qu'on soumet le solide catalytique à un lavage au moyen d'un liquide organique choisi parmi les hydrocarbures aliphatiques.

8. Procédé selon la revendication 7, caractérisé en ce que, dans le cas où le solide catalytique est soumis à un mûrissage, on effectue le lavage après le mûrissage.

9. Procédé selon l'une quelconque des revendications 1 à 8, caractérisé en ce que l'agent réductohalogénant est choisi parmi ceux répondant aux formules brutes $Ti(Toluène)Al_2Cl_8$ et $Zr(Toluène)Al_2Cl_8$.

10. Procédé selon l'une quelconque des revendications 1 à 9, caractérisé en ce que l'agent réductohalogénant est déposé sur un support minéral.

11. Procédé selon la revendication 10, caractérisé en ce que, pour déposer l'agent réductohalogénant sur le support minéral, on imprègne le support minéral avec une solution de l'agent réductohalogénant dans un diluant choisi parmi les hydrocarbures aromatiques.

12. Procédé selon la revendication 10 ou 11, caractérisé en ce que le support minéral est de la silice déshydroxylée.

13. Procédé selon l'une quelconque des revendications 1 à 12, caractérisé en ce que le composé répondant à l'une des formules $MY_x(O-R')_{t-x}$ ou $M'O_y(O-R'')_{s-2y}$ est sélectionné parmi ceux dans lesquels M ou M' est du Ti, du V ou du Zr.

14. Procédé selon la revendication 13, caractérisé en ce que le composé $MY_x(O-R')_{t-x}$ est sélectionné parmi le tétrabutylate de titane et le tétrabutylate de vanadium.

15. Procédé selon l'une quelconque des revendications 1 à 14, caractérisé en ce que le composé $MgX_n(O-R)_{2-n}$ est un dialcoolate de magnésium que l'on met en oeuvre en une quantité telle que le rapport molaire (M ou M')/Mg soit de 1 à 2.

16. Procédé selon la revendication 15, caractérisé en ce que, après la séparation du solide catalytique précipité du milieu réactionnel, on traite ledit solide catalytique au moyen de tétrahalogénure de titane, dont l'halogène est identique à celui de l'agent réductohalogénant mis en oeuvre.

17. Procédé selon la revendication 16, caractérisé en ce qu'on traite le solide catalytique au moyen de tétrachlorure de titane.

18. Procédé selon la revendication 16 ou 17, caractérisé en ce que, après le traitement au moyen de tétrahalogénure de titane, le solide catalytique est soumis à un lavage à l'aide d'un liquide organique choisi parmi les hydrocarbures aliphatiques.

19. Procédé selon l'une quelconque des revendications 7 à 18, caractérisé en ce que le liquide organique du lavage est l'hexane.

20. Procédé selon l'une quelconque des revendications 1 à 19, caractérisé en ce que le composé de magnésium est choisi parmi le dichlorure de magnésium et le diéthylate de magnésium.

**21.** Procédé selon l'une quelconque des revendications 14 à 20, caractérisé en ce que, dans le cas où le composé $MY_x(O-R')_{t-x}$ est du tétrabutylate de titane et le composé de magnésium est le dichlorure de magnésium, on met en oeuvre un rapport molaire $Ti(O-C_4H_9)_4/MgCl_2$ au moins égal à 2.

**22.** Procédé selon l'une quelconque des revendications 14 à 20, caractérisé en ce que, dans le cas où le composé $MY_x(O-R')_{t-x}$ est du tétrabutylate de vanadium et le composé de magnésium est le dichlorure de magnésium, on met en oeuvre un rapport molaire $V(O-C_4H_9)_4/MgCl_2$ de 2 à 20.

**23.** Procédé selon l'une quelconque des revendications 1 à 22, caractérisé en ce que l'agent réductohalogénant de formule brute $M''(A)Al_2(X',X'')_8$ est préparé en faisant réagir les composés suivants

- $M''X'_4$
- $AlX''_3$
- A

avec du magnésium,
où

- M'' représente un métal de transition du groupe IVB du tableau périodique
- A représente un hydrocarbure aromatique
- X' et X'' représentent chacun un halogène.

**24.** Solide catalytique susceptible d'être obtenu par le procédé selon l'une quelquonque des revendications 1-23 comprenant un coprécipité d'un halogénure de magnésium et d'halogénures d'au moins deux métaux de transition différents sélectionnés parmi les groupes IVB et VB du tableau périodique, dont au moins 90 % en poids présente une structure amorphe.

**25.** Solide catalytique selon la revendication 24, caractérisé en ce qu'il présente une teneur en métaux de transition de 5 à 30 % du poids du solide catalytique, une teneur en magnésium de 0,5 % à 20 % du poids du solide catalytique, et une teneur en aluminium de 0,5 à 10 % du poids du solide catalytique.

**26.** Solide catalytique selon la revendication 24 ou 25, caractérisé en ce que les métaux de transition sont dans un rapport molaire de 1 à 4.

**27.** Solide catalytique selon l'une quelconque des revendications 24 à 26, caractérisé en ce que les halogénures des deux métaux de transition sont des chlorures.

**28.** Procédé de polymérisation d'au moins une oléfine selon lequel on met en oeuvre un solide catalytique conforme à l'une quelconque des revendications 24 à 27.

**29.** Procédé selon la revendication 28, caractérisé en ce que l'oléfine est de l'éthylène.

**Patentansprüche**

**1.** Verfahren zur Herstellung eines katalytischen Feststoffs, gemäß dem

a) man ein Gemisch herstellt, das einerseits wenigstens eine Magnesiumverbindung, die unter Magnesiumoxid und den Verbindungen der Formeln $MgX_n(O-R)_{2-n}$ ausgewählt ist, und andererseits wenigstens eine Übergangsmetallverbindung, die unter den Verbindungen der Formeln $MY_x(O-R')_{t-x}$ und $M'O_y(O-R'')_{s-2y}$, in denen

- X ein Halogen bezeichnet
- M und M' jedes ein Übergangsmetall der Gruppen IVB und VB des Periodensystems bezeichnen, dessen Valenz wenigstens gleich 4 ist
- Y ein Halogen oder eine Gruppe (O-R''') bezeichnet
- R, R', R'' und R''' jedes eine gegebenenfalls substituierte Alkyl-, Aryl- oder Cycloalkylgruppe bezeichnen
- $0 \leq n \leq 2$
- $0 \leq x \leq t$, wobei t gleich der Valenz von M ist
- $0 \leq y \leq s/2$, wobei s gleich der Valenz von M' ist,

ausgewählt ist, umfaßt,
b) man das so erhaltene Gemisch mit einem Reduktohalogenierungsmittel reduziert und halogeniert und
c) man den so erhaltenen ausgefällten katalytischen Feststoff vom Reaktionsmedium abtrennt,

dadurch gekennzeichnet, daß das Reduktohalogenierungsmittel wenigstens einen Komplex der Summenformel $M''(A)Al_2(X',X'')_8$, in der

- M'' ein Übergangsmetall der Gruppe IVB des Periodensystems darstellt
- A einen aromatischen Kohlenwasserstoff darstellt
- X' und X'' jedes ein Halogen darstellen,

umfaßt.

**2.** Verfahren gemäß Anspruch 1, dadurch gekennzeichnet, daß die Alkyl-, Aryl- oder Cycloalkylgruppe unter denjenigen ausgewählt ist, die bis zu 20 Kohlenstoffatome umfassen.

3. Verfahren gemäß Anspruch 1 oder 2, dadurch gekennzeichnet, daß die Verbindung des Übergangsmetalls M oder M', die Magnesiumverbindung und der Komplex M"(A)Al$_2$(X',X")$_8$ in solchen Mengen verwendet werden, daß das Molverhältnis (M oder M')/Mg 1 bis 20 ist und daß das Molverhältnis M"/(M oder M') 0,3 bis 1 ist.

4. Verfahren gemäß einem der Ansprüche 1 bis 3, dadurch gekennzeichnet, daß man das Gemisch in wenigstens einem organischen Lösungsmittel, das unter Toluol und Hexan ausgewählt ist, herstellt und man den Komplex M"(A)Al$_2$(X',X")$_8$ als Lösung in Toluol verwendet.

5. Verfahren gemäß einem der Ansprüche 1 bis 4, dadurch gekennzeichnet, daß man das Gemisch bei einer Temperatur von 50 bis 135 °C herstellt.

6. Verfahren gemäß einem der Ansprüche 1 bis 5, dadurch gekennzeichnet, daß man den katalytischen Feststoff bei einer Temperatur von 45 bis 80 °C während wenigstens einer Stunde einem Reifen unterzieht.

7. Verfahren gemäß einem der Ansprüche 1 bis 6, dadurch gekennzeichnet, daß man den katalytischen Feststoff mit einer organischen Flüssigkeit, die unter den aliphatischen Kohlenwasserstoffen ausgewählt ist, wäscht.

8. Verfahren gemäß Anspruch 7, dadurch gekennzeichnet, daß man, wenn der katalytische Feststoff einem Reifen unterzogen wird, das Waschen nach dem Reifen ausführt.

9. Verfahren gemäß einem der Ansprüche 1 bis 8, dadurch gekennzeichnet, daß das Reduktohalogenierungsmittel unter denjenigen ausgewählt ist, die den Summenformeln Ti(Toluol)Al$_2$Cl$_8$ und Zr(Toluol)Al$_2$Cl$_8$ entsprechen.

10. Verfahren gemäß einem der Ansprüche 1 bis 9, dadurch gekennzeichnet, daß das Reduktohalogenierungsmittel auf einem mineralischen Träger abgeschieden ist.

11. Verfahren gemäß Anspruch 10, dadurch gekennzeichnet, daß man, um das Reduktohalogenierungsmittel auf dem mineralischen Träger abzuscheiden, den mineralischen Träger mit einer Lösung des Reduktohalogenierungsmittels in einem unter den aromatischen Kohlenwasserstoffen ausgewählten Verdünnungsmittel tränkt.

12. Verfahren gemäß Anspruch 10 oder 11, dadurch gekennzeichnet, daß der mineralische Träger dehydroxylierte Kieselerde ist.

13. Verfahren gemäß einem der Ansprüche 1 bis 12, dadurch gekennzeichnet, daß die einer der Formeln MY$_x$(O-R')$_{t-x}$ oder M'O$_y$(O-R")$_{s-2y}$ entsprechende Verbindung unter denjenigen ausgewählt ist, in denen M oder M' Ti, V oder Zr ist.

14. Verfahren gemäß Anspruch 13, dadurch gekennzeichnet, daß die Verbindung MY$_x$(O-R')$_{t-x}$ unter Titantetrabutylat und Vanadiumtetrabutylat ausgewählt ist.

15. Verfahren gemäß einem der Ansprüche 1 bis 14, dadurch gekennzeichnet, daß die Verbindung MgX$_n$(O-R)$_{2-n}$ ein Magnesiumdialkoholat ist, das man in einer solchen Menge verwendet, daß das Molverhältnis (M oder M')/Mg 1 bis 2 ist.

16. Verfahren gemäß Anspruch 15, dadurch gekennzeichnet, daß man nach der Abtrennung des ausgefällten katalytischen Feststoffs vom Reaktionsmedium besagten katalytischen Feststoff mit Titantetrahalogenid, dessen Halogen mit dem des verwendeten Reduktohalogenierungsmittel identisch ist, behandelt.

17. Verfahren gemäß Anspruch 16, dadurch gekennzeichnet, daß man den katalytischen Feststoff mit Titantetrachlorid behandelt.

18. Verfahren gemäß Anspruch 16 oder 17, dadurch gekennzeichnet, daß der katalytische Feststoff nach der Behandlung mit Titantetrahalogenid mit Hilfe einer organischen Flüssigkeit, die unter den aliphatischen Kohlenwasserstoffen ausgewählt ist, gewaschen wird.

19. Verfahren gemäß einem der Ansprüche 7 bis 18, dadurch gekennzeichnet, daß die organische Waschflüssigkeit Hexan ist.

20. Verfahren gemäß einem der Ansprüche 1 bis 19, dadurch gekennzeichnet, daß die Magnesiumverbindung unter Magnesiumdichlorid und Magnesiumdiethylat ausgewählt ist.

21. Verfahren gemäß einem der Ansprüche 14 bis 20, dadurch gekennzeichnet, daß man, wenn die Verbindung MY$_x$(O-R')$_{t-x}$ Titantetrabutylat ist und die Magnesiumverbindung Magnesiumdichlorid ist, ein Molverhältnis Ti(O-C$_4$H$_9$)$_4$/MgCl$_2$ von wenigstens gleich 2 verwendet.

22. Verfahren gemäß einem der Ansprüche 14 bis 20, dadurch gekennzeichnet, daß man, wenn die Ver-

bindung $MY_x(O-R')_{t-x}$ Vanadiumtetrabutylat ist und die Magnesiumverbindung Magnesiumdichlorid ist, ein Molverhältnis $V(O-C_4H_9)_4/MgCl_2$ von 2 bis 20 verwendet.

23. Verfahren gemäß einem der Ansprüche 1 bis 22, dadurch gekennzeichnet, daß das Reduktohalogenierungsmittel der Summenformel $M''(A)Al_2(X',X'')_8$ hergestellt wird, indem man die folgenden Verbindungen

   - $M''X'_4$
   - $AlX''_3$
   - A

   mit Magnesium reagieren läßt,
   wobei

   - M'' ein Übergangsmetall der Gruppe IVB des Periodensystems darstellt
   - A einen aromatischen Kohlenwasserstoff darstellt
   - X' und X'' jedes ein Halogen darstellen.

24. Katalytischer Feststoff, der durch das Verfahren gemäß einem der Ansprüche 1 - 23 erhalten werden kann, der ein Copräzipitat eines Magnesiumhalogenids und von Halogeniden wenigstens zweier verschiedener Übergangsmetalle, die aus den Gruppen IVB und VB des Periodensystems ausgewählt sind, umfaßt, von dem wenigstens 90 Gew.-% eine amorphe Struktur aufweisen.

25. Katalytischer Feststoff gemäß Anspruch 24, dadurch gekennzeichnet, daß er einen Übergangsmetallgehalt von 5 bis 30% des Gewichts des katalytischen Feststoffs, einen Magnesiumgehalt von 0,5% bis 20% des Gewichts des katalytischen Feststoffs und einen Aluminiumgehalt von 0,5 bis 10% des Gewichts des katalytischen Feststoffs aufweist.

26. Katalytischer Feststoff gemäß Anspruch 24 oder 25, dadurch gekennzeichnet, daß die Übergangsmetalle in einem Molverhältnis von 1 bis 4 vorliegen.

27. Katalytischer Feststoff gemäß einem der Ansprüche 24 bis 26, dadurch gekennzeichnet, daß die Halogenide der beiden Übergangsmetalle Chloride sind.

28. Verfahren zur Polymerisation wenigstens eines Olefins, gemäß dem man einen katalytischen Feststoff gemäß einem der Ansprüche 24 bis 27 verwendet.

29. Verfahren gemäß Anspruch 28, dadurch gekennzeichnet, daß das Olefin Ethylen ist.

**Claims**

1. Process for the manufacture of a catalytic solid, according to which

   a) a mixture is prepared comprising, on the one hand, at least one magnesium compound chosen from Mg oxide and compounds of formulae $MgX_n(O-R)_{2-n}$ and, on the other hand, at least one transition metal compound chosen from compounds of formulae $MY_x(O-R')_{t-x}$ and $M'O_y(O-R'')_{s-2y}$ in which

   - X denotes a halogen
   - each of M and M' denotes a transition metal from groups IVB and VB of the Periodic Table, the valency of which is at least equal to 4
   - Y denotes a halogen or a group (O-R''')
   - each of R, R', R'' V and R''' denotes an optionally substituted alkyl, aryl or cycloalkyl group
   - $0 \leq n \leq 2$
   - $0 \leq x \leq t$, t being equal to the valency of M
   - $0 \leq y \leq s/2$, s being equal to the valency of M',

   b) the mixture thus obtained is reduced and halogenated by means of a reducing-halogenating agent, and
   c) the precipitated catalytic solid thus obtained is isolated from the reaction mixture,

   characterised in that the reducing-halogenating agent comprises at least one complex of empirical formula $M''(A)Al_2(X',X'')_8$ in which

   - M'' denotes a transition metal of group IVB of the Periodic Table
   - A denotes an aromatic hydrocarbon
   - each of X' and X'' denotes a halogen.

2. Process according to Claim 1, characterised in that the alkyl, aryl or cycloalkyl group is selected from those containing up to 20 carbon atoms.

3. Process according to Claim 1 or 2, characterised in that the compound of transition metal M or M', the magnesium compound and the complex $M''(A)Al_2(X',X'')_8$ are used in quantities such that the molar ratio (M or M')/Mg is from 1 to 20 and that the molar ratio M''/(M or M') is from 0.3 to 1.

4. Process according to any one of Claims 1 to 3, characterised in that the mixture is prepared in at least one organic solvent selected from toluene and hexane and the complex $M''(A)Al_2(X',X'')_8$ is used in the form of a solution in toluene.

5. Process according to any one of Claims 1 to 4, characterised in that the mixture is prepared at a temperature of 50 to 135°C.

6. Process according to any one of Claims 1 to 5, characterised in that the catalytic solid is subjected to maturing at a temperature of 45 to 80°C for at least one hour.

7. Process according to any one of Claims 1 to 6, characterised in that the catalytic solid is subjected to washing with an organic liquid chosen from aliphatic hydrocarbons.

8. Process according to Claim 7, characterised in that, in the case where the catalytic solid is subjected to maturing, the washing is performed after the maturing.

9. Process according to any one of Claims 1 to 8, characterised in that the reducing-halogenating agent is chosen from those corresponding to the empirical formulae $Ti(toluene)Al_2Cl_8$ and $Zr(toluene)Al_2Cl_8$.

10. Process according to any one of Claims 1 to 9, characterised in that the reducing-halogenating agent is deposited on an inorganic support.

11. Process according to Claim 10, characterised in that, in order to deposit the reducing-halogenating agent on the inorganic support, the inorganic support is impregnated with a solution of the reducing-halogenating agent in a diluent chosen from aromatic hydrocarbons.

12. Process according to Claim 10 or 11, characterised in that the inorganic support is dehydroxylated silica.

13. Process according to any one of Claims 1 to 12, characterised in that the compound corresponding to one of the formulae $MY_x(O-R')_{t-x}$ and $M'O_y(O-R'')_{s-2y}$ is selected from those in which M or M' is Ti, V or Zr.

14. Process according to Claim 13, characterised in that the compound $MY_x(O-R')_{t-x}$ is selected from titanium tetrabutylate and vanadium tetrabutylate.

15. Process according to any one of Claims 1 to 14, characterised in that the compound $MgX_n(O-R)_{2-n}$ is a magnesium dialcoholate which is used in a quantity such that the molar ratio (M or M')/Mg is from 1 to 2.

16. Process according to Claim 15, characterised in that, after the isolation of the precipitated catalytic solid from the reaction mixture, the said catalytic solid is treated with titanium tetrahalide in which the halogen is identical with that of the reducing-halogenating agent used.

17. Process according to Claim 16, characterised in that the precipitated catalytic solid is treated with titanium tetrachloride.

18. Process according to Claim 16 or 17, characterised in that, after the treatment with titanium tetrahalide, the catalytic solid is subjected to washing with an organic liquid chosen from aliphatic hydrocarbons.

19. Process according to any one of Claims 7 to 18, characterised in that the organic washing liquid is hexane.

20. Process according to any one of Claims 1 to 19, characterised in that the magnesium compound is chosen from magnesium dichloride and magnesium diethylate.

21. Process according to any one of Claims 14 to 19, characterised in that, in the case where the compound $MY_x(O-R')_{t-x}$ is titanium tetrabutylate and the magnesium compound is magnesium dichloride, a molar ratio $Ti(O-C_4H_9)_4/MgCl_2$ of at least 2 is used.

22. Process according to any one of Claims 14 to 19, characterised in that, in the case where the compound $MY_x(O-R')_{t-x}$ is vanadium tetrabutylate and the magnesium compound is magnesium dichloride, a molar ratio $V(O-C_4H_9)_4/MgCl_2$ of 2 to 20 is used.

23. Process according to any one of Claims 1 to 22, characterised in that the reducing-halogenating agent of empirical formula $M''(A)Al_2(X',X'')_8$ is prepared by reacting the following compounds

- $M''X'_4$
- $AlX''_3$
- A

with magnesium,
where

- M'' denotes a transition metal of group IVB of the Periodic Table
- A denotes an aromatic hydrocarbon
- each of X' and X'' denotes a halogen.

24. Catalytic solid obtainable by the process according to any one of Claims 1 to 23 comprising a coprecipitate of a magnesium halide and of halides of at least two different transition metals selected from groups IVB and VB of the Periodic Table, in which at least 90 % by weight has an amorphous structure.

**25.** Catalytic solid according to Claim 24, characterised in that it has a content of transition metals of 5 to 30 % of the weight of the catalytic solid, a magnesium content of 0.5 % to 20 % of the weight of the catalytic solid, and an aluminium content of 0.5 to 10 % of the weight of the catalytic solid.

**26.** Catalytic solid according to Claim 24 or 25, characterised in that the transition metals are in a molar ratio of 1 to 4.

**27.** Catalytic solid according to any one of Claims 24 to 26, characterised in that the halides of the two transition metals are chlorides.

**28.** Process for the polymerisation of at least one olefin, according to which a catalytic solid in accordance with any one of Claims 24 to 27 is used.

**29.** Process according to Claim 28, characterised in that the olefin is ethylene.